(19) Europäisches Patentamt
European Patent Office
Office européen des brevets

(11) **EP 4 098 764 A1**

(12) **EUROPEAN PATENT APPLICATION**
published in accordance with Art. 153(4) EPC

(43) Date of publication:
**07.12.2022 Bulletin 2022/49**

(21) Application number: **21747538.3**

(22) Date of filing: **26.01.2021**

(51) International Patent Classification (IPC):
*C22C 38/00* [(2006.01)]   *B21C 37/08* [(2006.01)]
*B23K 9/025* [(2006.01)]   *B23K 9/18* [(2006.01)]
*B23K 35/30* [(2006.01)]   *B23K 35/362* [(2006.01)]
*C22C 38/58* [(2006.01)]

(52) Cooperative Patent Classification (CPC):
**B21C 37/08; B23K 9/025; B23K 9/18; B23K 35/30;
B23K 35/362; C22C 38/00; C22C 38/58**

(86) International application number:
**PCT/JP2021/002643**

(87) International publication number:
**WO 2021/153559 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2020 JP 2020012395**

(71) Applicant: **JFE Steel Corporation
Tokyo 100-0011 (JP)**

(72) Inventors:
• **ISHIGAMI, Atsushi**
  **Tokyo 100-0011 (JP)**
• **HAYAKAWA, Naoya**
  **Tokyo 100-0011 (JP)**

(74) Representative: **Grünecker Patent- und
Rechtsanwälte
PartG mbB
Leopoldstraße 4
80802 München (DE)**

(54) **WELDED STEEL PIPE AND METHOD FOR MANUFACTURING SAME**

(57)     [Solution] A welded steel pipe obtained by forming a steel plate having a thickness of 6 mm to 20 mm into a cylindrical shape, by butting both ends in the width direction of the steel plate and by performing one-layer submerged arc welding on both inner and outer surface sides, the steel plate having a specified chemical composition, in which Pcm calculated by using the equation Pcm = [C] + [Si]/30 + ([Mn] + [Cu] + [Cr])/20 + [Ni]/60 + [Mo]/15 + [V]/10 + 5[B] from the constituents of the weld metals on the inner and outer surface sides is 0.140 to 0.185.

## FIG. 1

EP 4 098 764 A1

**Description**

Technical Field

The present invention relates to a welded steel pipe which can preferably be used as a line pipe for transporting petroleum oil or natural gas and a method for manufacturing the welded steel pipe.

Background Art

Since a welded steel pipe such as a UOE steel pipe, a spiral steel pipe, and the like is manufactured by forming a plate- or strip-shaped steel plate into a cylindrical shape and by performing welding (for example, submerged arc welding or the like) on the butted ends in the width direction of the steel plate, a linear weld zone (a so-called seam) is formed. A welded steel pipe which is manufactured in such a manner is used for various purposes of use and is required to have a quality suitable for such various purposes of use. For example, to use the steel pipe as a line pipe for transporting petroleum oil or natural gas, the steel pipe is required to have good mechanical properties (for example, toughness or the like), and, in particular, there is a demand for significantly improving low-temperature toughness to use the steel pipe as a line pipe which is laid in a cold region.

To improve the quality of a welded steel pipe, it is necessary to improve the properties of a steel plate which is used as a material and the properties of a weld metal which is formed at a seam. However, it is difficult to improve the properties of a steel plate in a process for manufacturing a welded steel pipe in which the steel plate is formed into a cylindrical shape and in which a seam is subjected to welding. Therefore, investigations have been conducted regarding a technique for improving the properties of a seam (that is, the mechanical properties of a weld metal) by controlling the constituents of a steel plate and a welding material (for example, a flux or a welding wire) and by appropriately combining these materials when performing welding (refer to Patent Literature 1).

A submerged arc welding method is widely used for welding the seam of a welded steel pipe, and a technique in which submerged arc welding is performed by using two or more electrodes (that is, welding wires) arranged in a line in the proceeding direction of welding (a so-called multiple electrode submerged arc welding technique) is prevalent. In addition, from the viewpoint of improving productivity, a welding technique in which a welding speed is increased by using plural electrodes and by supplying a large welding current of more than 1000 A has been put into practice.

By using such a multiple electrode submerged arc welding technique, it is possible to perform double-sided one-layer welding on a seam. When double-sided one-layer welding is performed on the seam of a welded steel pipe, one-layer welding is first performed on the inner surface side, and one-layer welding is then performed on the outer surface side. Consequently, since a portion of a weld metal on the inner surface side is subjected to reheating when welding is performed on the outer surface side, mechanical properties partially change. Therefore, investigations have been conducted regarding a technique for improving the properties of a seam (that is, the mechanical properties of weld metals) by separately controlling the constituents of each of the weld metals on the inner and outer surface sides (refer to Patent Literature 2).

In addition, to use a welded steel pipe as a line pipe used in a sour environment, a welded steel pipe having sour resistance (for example, equivalent to a welded steel pipe of grades X60 to X65 as specified in the API Standards) has been developed, and since sulfide stress corrosion cracking tends to occur in a seam in a sour environment, it is necessary to decrease the hardness of a weld metal. Therefore, investigations have been conducted regarding a technique for decreasing the oxygen content of a weld metal, that is, for improving the mechanical properties of the weld metal, by using a combination of a welding wire having a decreased alloy element content and a high-basicity flux (refer to Patent Literature 3).

Moreover, to form a bead having good aesthetic appearance by stabilizing the shape of the bead, investigations have also been conducted regarding a technique for performing welding while, by using a cover covering molten slag and molten metal and their vicinity, nitrogen ($N_2$) contained in a flux is substituted with carbon dioxide ($CO_2$) or argon gas (Ar), and the vicinity of a molten metal is sealed (that is, shielded) from the atmosphere (refer to Patent Literature 4).

Citation List

Patent Literature

PTL 1: Japanese Examined Patent Application Publication No. 1-38851
PTL 2: Japanese Unexamined Patent Application Publication No. 9-1344
PTL 3: Japanese Unexamined Patent Application Publication No. 48-100344

PTL 4: Japanese Unexamined Patent Application Publication No. 2010-29931

Summary of Invention

Technical Problem

However, even in the case where the technique disclosed in Patent Literature 1 or Patent Literature 2 is used for a welded steel pipe formed from a steel plate having a thickness of 6 mm to 20 mm, it is not possible to expect a significant improvement in the properties of a seam. This is because, since there is a decrease in the amount of deoxidization products floating up from a molten metal formed when welding is performed, there is an increase in the oxygen content in a weld metal, which results in a negative effect on the mechanical properties of the weld metal. Such a phenomenon tends to occur when a welded steel pipe used in an environment in which petroleum oil or natural gas containing hydrogen sulfide ($H_2S$) is transported (so-called sour environment) is manufactured.
In the case of the technique disclosed in Patent Literature 3, since there is a decrease in the viscosity of molten slag when welding is performed, the shape of a bead tends to be unstable.
In the case of the technique disclosed in Patent Literature 4, since it is necessary to install complex ancillary facilities such as pipework for supplying a shielding gas in addition to a main welder body for submerged arc welding, there is an increase in costs for manufacturing a welded steel pipe.
An object of the present invention is to solve the problems of the conventional techniques and to thereby provide a welded steel pipe having a thickness of 6 mm to 20 mm, a bead having good aesthetic appearance, and a weld metal excellent in terms of mechanical properties and a method for manufacturing the welded steel pipe.

Solution to Problem

The present inventors, as a simulation experiment of double-sided one-layer welding of a seam in a process for manufacturing a welded steel pipe, after having butted two steel plates having the same thickness and having performed one-layer welding on the lower surface side (corresponding to the inner surface side) of the plates, performed one-layer welding on the upper surface side (corresponding to the outer surface side). The thickness of the steel plates used in the experiment was 6 mm to 20 mm, and a multiple electrode submerged arc welding method was used for performing one-layer welding on both sides. In this simulation experiment, since a weld metal formed on the lower surface side is subjected to reheating when welding is performed on the upper surface side, the properties of a weld zone (in particular, the mechanical properties of a weld metal on the lower surface side) partially change.
Therefore, investigations were conducted regarding the mechanical properties of a weld zone that is obtained and the visual appearance of a bead. As a result, it was found that it is possible to obtain a weld zone having excellent properties by separately controlling the constituents of each weld metal on the lower and upper surface sides.
The present invention has been completed on the basis of the findings described above.

[1] A welded steel pipe obtained by forming a steel plate having a thickness of 6 mm to 20 mm into a cylindrical shape, by butting both ends in a width direction of the steel plate and by performing one-layer submerged arc welding on both inner and outer surface sides,

the steel plate having a chemical composition containing C: 0.030 mass% to 0.080 mass%, Si: 0.10 mass% to 0.50 mass%, Mn: 1.00 mass% to 2.00 mass%, P: 0.010 mass% or less, S: 0.005 mass% or less, Cu: 0.05 mass% or less, Ni: 0.05 mass% or less, Cr: 0.50 mass% or less, Mo: 0.20 mass% or less, Nb: 0.05 mass% or less, V: 0.100 mass% or less, Ti: 0.050 mass% or less, Al: 0.01 mass% to 0.05 mass%, Ca: 0.0005 mass% to 0.0050 mass%, Mg: 0.0003 mass% to 0.0100 mass%, REM: 0.020 mass% or less, and a balance of Fe and incidental impurities,
a weld metal on the inner surface side having a chemical composition containing C: 0.030 mass% to 0.060 mass%, Si: 0.50 mass% or less, Mn: 0.80 mass% to 1.80 mass%, Cu: 0.05 mass% or less, Ni: 0.05 mass% or less, Cr: 0.30 mass% or less, Mo: 0.10 mass% or less, Nb: 0.040 mass% or less, V: 0.010 mass% or less, Ti: 0.010 mass% to 0.040 mass%, B: 0.0015 mass% to 0.0040 mass%, Al: 0.030 mass% or less, O: 0.020 mass% to 0.040 mass%, N: 0.007 mass% or less, and a balance of Fe and incidental impurities, in which Pcm calculated by using equation (1) below is 0.140 to 0.180, and
a weld metal on the outer surface side having a chemical composition containing C: 0.030 mass% to 0.060 mass%, Si: 0.50 mass% or less, Mn: 0.80 mass% to 1.80 mass%, Cu: 0.05 mass% or less, Ni: 0.05 mass% or less, Cr: 0.30 mass% or less, Mo: 0.20 mass% or less, Nb: 0.040 mass% or less, V: 0.010 mass% or less, Ti: 0.010 mass% to 0.040 mass%, B: 0.0015 mass% to 0.0060 mass%, Al: 0.030 mass% or less, O: 0.020 mass% to 0.040 mass%, N: 0.007 mass% or less, and a balance of Fe and incidental impurities, in which Pcm calculated by using equation (1) below is 0.140 to 0.185.

$$Pcm = [C] + [Si]/30 + ([Mn] + [Cu] + [Cr])/20 + [Ni]/60 + [Mo]/15 + [V]/10 + 5[B] \quad \cdots \quad (1)$$

[C]: C content (mass%) in the weld metal
[Si]: Si content (mass%) in the weld metal
[Mn]: Mn content (mass%) in the weld metal
[Cu]: Cu content (mass%) in the weld metal
[Cr]: Cr content (mass%) in the weld metal
[Ni]: Ni content (mass%) in the weld metal
[Mo]: Mo content (mass%) in the weld metal
[V]: V content (mass%) in the weld metal
[B]: B content (mass%) in the weld metal

[2] A method for manufacturing a welded steel pipe, the method including forming a steel plate having a thickness of 6 mm to 20 mm and having the chemical composition according to item [1] into a cylindrical shape, butting both ends in a width direction of the steel plate, and performing one-layer submerged arc welding on both inner and outer surface sides to form weld metals having the chemical compositions according to item [1].

[3] The method for manufacturing a welded steel pipe according to item [2], in which a flux used for submerged arc welding performed on the inner and outer surface sides satisfies a condition that B.I. calculated by using equation (2) below is 1.0 to 2.2.

$$B.I. = ([CaO] + [CaF_2] + [MgO] + 0.5[MnO])/\{[SiO_2] + 0.5([Al_2O_3] + [TiO_2])\} \quad \cdots \quad (2)$$

[CaO]: CaO content (mass%) in the flux
[CaF_2] : CaF_2 content (mass%) in the flux
[MgO]: MgO content (mass%) in the flux
[MnO]: MnO content (mass%) in the flux
[SiO_2] : SiO_2 content (mass%) in the flux
[Al_2O_3] : Al_2O_3 content (mass%) in the flux
[TiO_2] : TiO_2 content (mass%) in the flux

[4] The method for manufacturing a welded steel pipe according to item [2] or [3], in which the submerged arc welding is performed under a condition in which a welding heat input on the inner surface side $Q_B$ (kJ/mm) satisfies relational expression (3) below and a condition in which a welding heat input on the outer surface side $Q_F$ (kJ/mm) satisfies relational expression (4) below.

$$1.3 \times \exp(0.045 \times t) \leq Q_B \leq 1.9 \times \exp(0.048 \times t) \quad (3)$$

$$1.3 \times \exp(0.045 \times t) \leq Q_F \leq 1.9 \times \exp(0.048 \times t) \quad (4)$$

t: thickness (mm) of the steel plate

[5] The method for manufacturing a welded steel pipe according to any one of items [2] to [4], in which the submerged arc welding is performed by using a multiple electrode submerged arc welding method.

[6] The method for manufacturing a welded steel pipe according to any one of items [2] to [5], in which one-layer welding is performed on the outer surface side after one-layer welding has been performed on the inner surface side. Advantageous Effects of Invention

According to the present invention, in the case of welding performed for manufacturing a welded steel pipe having a comparatively small thickness of 6 mm to 20 mm where the O content in a weld metal tends to be high, it is possible to obtain not only excellent mechanical properties in an original weld metal portion and in a reheated weld metal portion but also a bead having good aesthetic appearance, which has a significant effect on the industry.

Brief Description of Drawings

[Fig. 1] Fig. 1 is a schematic sectional diagram illustrating one example of a groove shape.
[Fig. 2] Fig. 2 is a sectional diagram illustrating the Vickers hardness measurement positions.
[Fig. 3] Fig. 3 is a sectional diagram illustrating the position at which a Charpy impact test specimen was taken.
[Fig. 4] Fig. 4 is a sectional diagram illustrating the position at which a Charpy impact test specimen was taken.
[Fig. 5] Fig. 5 is a sectional diagram illustrating the position at which a Charpy impact test specimen was taken.
Description of Embodiments

First, the constituents of a steel plate, which is a material of a welded steel pipe according to the present invention, will be described.

C: 0.030 mass% to 0.080 mass%

Although C is an element which is important for improving the strength of a steel plate, in the case where the C content is excessively low, it is not possible to obtain a steel plate having predetermined strength. On the other hand, in the case where the C content is excessively high, there is a deterioration in the toughness of a steel plate. Therefore, the C content is set to be 0.030 mass% to 0.080 mass%. It is preferable that the C content be 0.040 mass% or more and 0.060 mass% or less.

Si: 0.10 mass% to 0.50 mass%

Si is an element which is inevitably contained in a deoxidization process when molten steel is prepared and which is effective for improving the strength of a steel plate through solid solution strengthening. In the case where the Si content is excessively low, it is not possible to obtain a steel plate having predetermined strength. On the other hand, in the case where the Si content is excessively high, there is a deterioration in the toughness of a steel plate. Therefore, the Si content is set to be 0.10 mass% to 0.50 mass%. It is preferable that the lower limit of the Si content be 0.20 mass% and the upper limit of the Si content be 0.40 mass%.

Mn: 1.00 mass% to 2.00 mass%

Although Mn is an element which is important for improving the strength of a steel plate by increasing the hardenability of the steel plate, in the case where the Mn content is excessively low, it is not possible to realize such an effect. On the other hand, in the case where the Mn content is excessively high, MnS is easily formed, which results in a deterioration in the toughness of a steel plate and results in hydrogen induced cracking. Therefore, the Mn content is set to be 1.00 mass% to 2.00 mass%. It is preferable that the lower limit of the Mn content be 1.20 mass% and the upper limit of the Mn content be 1.50 mass%.

P: 0.010 mass% or less

P is an element which causes a deterioration in the toughness of a steel plate and a welded heat affected zone as a result of being mixed in as an impurity when molten steel is prepared. Therefore, since the effect of improving toughness increases with a decrease in the P content, the P content is set to be 0.010 mass% or less. It is preferable that the lower limit of the P content be 0.001 mass% or more in consideration of dephosphorization costs and the upper limit of the P content be 0.006 mass% or less.

S: 0.005 mass% or less

Since S is an element which promotes center segregation in a steel plate as a result of being mixed in as an impurity when molten steel is prepared, the quality of a welded steel pipe increases with a decrease in the S content. Therefore, the S content is set to be 0.005 mass% or less. It is preferable that the lower limit of the S content be 0.001 mass% in consideration of desulfurization costs and the upper limit of the S content be 0.003 mass%.

Cu: 0.05 mass% or less

Although Cu is an element which is important for improving the strength of a steel plate, in the case where the Cu content is excessively high, there is a deterioration in the toughness of the welded heat affected zone of a welded steel pipe. Therefore, the Cu content is set to be 0.05 mass% or less. It is preferable that the lower limit of the Cu content be 0.01 mass% and the upper limit of the Cu content be 0.03 mass%.

Ni: 0.05 mass% or less

Although Ni is an element which improves the strength and toughness of a steel plate, in the case where the Ni content is excessively high, sulfide stress corrosion cracking tends to occur in the weld metal of a welded steel pipe. Therefore, the Ni content is set to be 0.05 mass% or less. It is preferable that the lower limit of the Ni content be 0.005 mass% and the upper limit of the Ni content be 0.02 mass%.

Cr: 0.50 mass% or less

Although Cr is an element which is important for improving the strength of a steel plate, in the case where the Cr content is excessively high, there is a deterioration in the toughness of the welded heat affected zone of a welded steel pipe. Therefore, the Cr content is set to be 0.05 mass% or less. It is preferable that the lower limit of the Cr content be 0.10 mass% and the upper limit of the Cr content be 0.30 mass%.

Mo: 0.20 mass% or less

Although Mo is an element which improves the strength and toughness of a steel plate, in the case where double-sided one-layer welding is performed on a steel plate containing an excessive amount of Mo, precipitation embrittlement occurs in a weld metal on the inner surface side, which is formed in advance, as a result of being reheated when welding is subsequently performed on the outer surface side. Therefore, the Mo content is set to be 0.20 mass% or less. It is preferable that the lower limit of the Mo content be 0.05 mass% and the upper limit of the Mo content be 0.15 mass%.

Nb: 0.05 mass% or less

Although Nb is an element which is effective for extending a non-recrystallization temperature range when hot rolling is performed for manufacturing a steel plate, in the case where the Nb content is excessively high, there is a deterioration in the toughness of the welded heat affected zone of a welded steel pipe. In addition, in the case where double-sided one-layer welding is performed on a steel plate containing an excessive amount of Nb, precipitation embrittlement occurs in a weld metal on the inner surface side, which is formed in advance, as a result of being reheated when welding is subsequently performed on the outer surface side. Therefore, the Nb content is set to be 0.05 mass% or less. It is preferable that the lower limit of the Nb content be 0.02 mass% and the upper limit of the Nb content be 0.04 mass%.

V: 0.100 mass% or less

Although V is an element which is effective for improving the strength of a steel plate through precipitation strengthening, in the case where the V content is excessively high, there is a deterioration in the toughness of a steel plate and the welded heat affected zone of a welded steel pipe. Therefore, the V content is set to be 0.100 mass% or less. It is preferable that the lower limit of the V content be 0.001 mass% and the upper limit of the V content be 0.010 mass%.

Ti: 0.050 mass% or less

Ti is an element which improves the toughness of a steel plate by combining with N to form TiN and to thereby decrease the amount of solid solution N when molten steel is prepared. In addition, the formed TiN contributes to decreasing the crystal grain size of a steel plate and the welded heat affected zone of a welded steel pipe. However, in the case where the Ti content is excessively high, there is a deterioration in the toughness of a steel plate. Therefore, the Ti content is set to be 0.050 mass% or less. It is preferable that the lower limit of the Ti content be 0.005 mass% and the upper limit of the Ti content be 0.020 mass%.

Al: 0.01 mass% to 0.05 mass%

Although Al is an element which is added as a deoxidizing agent when molten steel is prepared, in the case where the Al content is excessively high, there is a deterioration in the toughness of a steel plate. On the other hand, in the case where an attempt is made to decrease the Al content significantly, since there is an increase in the time required to prepare molten steel, there is an increase in the manufacturing costs of a steel plate. Therefore, the Al content is set to be 0.01 mass% to 0.05 mass%. It is preferable that the lower limit of the Al content be 0.02 mass% and the upper limit of the Al content be 0.04 mass%.

Ca: 0.0005 mass% to 0.0050 mass%

Ca is an element which is effective for the morphological control of sulfide-based inclusions in steel and which improves ductility by inhibiting MnS from being formed. However, in the case where the Ca content is less than 0.0005 mass%, there is a decrease in such effects. In addition, in the case where the Ca content is more than 0.0050 mass%, a CaO-CaS cluster, which becomes the starting point at which HIC occurs or the starting point at which ductile cracking occurs at the time of deformation, is formed. Therefore, the Ca content is set to be 0.0005 mass% to 0.0050 mass%. It is preferable that the lower limit of the Ca content be 0.0010 mass% and the upper limit of the Ca content be 0.0040 mass%.

Mg: 0.0003 mass% to 0.0100 mass%

Mg is effective for decreasing the grain size of oxides in a steel-making process and inhibiting the formation of oxides having a large grain size, which cause a deterioration in ductility. However, in the case where the Mg content is less than 0.0003 mass%, there is a decrease in such an effect. In addition, in the case where the Mg content is more than 0.0100 mass%, such an effect becomes saturated. Therefore, the Mg content is set to be 0.0003 mass% to 0.0100 mass%. It is preferable that the lower limit of the Mg content be 0.0010 mass% and the upper limit of the Mg content be 0.0040 mass%.

REM: 0.020 mass% or less

REM is an element which is effective for the morphological control of sulfide-based inclusions in steel and which improves ductility by inhibiting MnS from being formed. However, in the case where the REM content is more than 0.020 mass%, such effects become saturated. Therefore, the REM content is set to be 0.020 mass% or less. On the other hand, in the case where the REM content is less than 0.0005 mass%, there is a decrease in such effects. Therefore, it is preferable that the REM content be 0.0005 mass% to 0.020 mass%. It is more preferable that the lower limit of the REM content be 0.0050 mass% and the upper limit of the REM content be 0.0150 mass%.

The remainder of the chemical composition of a steel plate which is different from the constituents described above is Fe and impurities which are incidentally mixed in (hereinafter, referred to as "incidental impurities").

Hereafter, the constituents of the weld metal of the welded steel pipe according to the present invention will be described. Here, in the present invention, a weld metal on the inner surface side is formed in advance, and a weld metal on the outer surface side is then formed.

C: 0.030 mass% to 0.060 mass%

Although C is an element which is important for improving the strength of a weld metal by increasing hardenability, in the case where the C content is excessively low, it is not possible to obtain a weld metal having predetermined strength. On the other hand, in the case where the C content is excessively high, since carbides and martensite are easily formed, there is a deterioration in the toughness of a weld metal. Therefore, the C content is set to be 0.030 mass% and 0.060 mass% on both inner and outer surface sides. It is preferable that the upper limit of the C content be 0.040 mass% and the lower limit of the C content be 0.060 mass%.

Si: 0.50 mass% or less

Although Si is an element which is inevitably contained in a deoxidization process when molten steel is prepared, in the case where the Si content is excessively high, there is a deterioration in the toughness of a weld metal. Therefore, the Si content is set to be 0.50 mass% or less on both inner and outer surface sides. It is preferable that the lower limit of the Si content be 0.20 mass% and the upper limit of the Si content be 0.40 mass%.

Mn: 0.80 mass% to 1.80 mass%

Although Mn is an element which improves the strength of a weld metal, in the case where the Mn content is excessively low, it is not possible to realize such an effect. On the other hand, in the case where the Mn content is excessively high, since there is a significant increase in the hardness of a weld metal, there is a deterioration in toughness. Therefore, the Mn content is set to be 0.80 mass% to 1.80 mass% on both inner and outer surface sides. It is preferable that the lower limit of the Mn content be 1.10 mass% and the upper limit of the Mn content be 1.70 mass%.

Cu: 0.05 mass% or less

Although Cu is an element which is important for improving the strength of a weld metal, in the case where the Cu content is excessively high, there is a deterioration in the toughness of a weld metal. Therefore, the Cu content is set to be 0.05 mass% or less on both inner and outer surface sides. It is preferable that the lower limit of the Cu content be 0.01 mass% and the upper limit of the Cu content be 0.04 mass%.

Ni: 0.05 mass% or less

Although Ni is an element which is important for improving the strength of a weld metal by increasing hardenability, in the case where the Ni content is excessively high, sulfide stress corrosion cracking tends to occur in the weld metal. Therefore, the Ni content is set to be 0.05 mass% or less on both inner and outer surface sides. It is preferable that the lower limit of the Ni content be 0.01 mass% and the upper limit of the Ni content be 0.03 mass%.

Cr: 0.30 mass% or less

Although Cr is an element which is important for improving the strength of a weld metal by increasing hardenability, in the case where the Cr content is excessively high, since there is a significant increase in the hardness of the weld metal, there is a deterioration in toughness. Therefore, the Cr content is set to be 0.30 mass% or less on both inner and outer surface sides. It is preferable that the Cr content be 0.10 mass% to 0.30 mass%. It is more preferable that the lower limit of the Cr content be 0.10 mass% and the upper limit of the Cr content be 0.20 mass%.

Mo: 0.10 mass% or less on the inner surface side and 0.20 mass% or less on the outer surface side

Although Mo is an element which is important for improving the strength of the weld metal by increasing hardenability, in the case where the Mo content is excessively high, since there is a significant increase in the hardness of a weld metal, there is a deterioration in toughness. In particular, since a weld metal on the inner surface side is reheated when welding is performed on the outer surface side, such a phenomenon markedly occurs on the inner surface side. Therefore, the Mo content is set to be 0.10 mass% or less on the inner surface side and 0.20 mass% or less on the outer surface side. It is preferable that the Mo content be lower on the inner surface side than on the outer surface side. It is more preferable that, on the inner surface side, the lower limit of the Mo content be 0.05 mass% and the upper limit of the Mo content be 0.10 mass% and that, on the outer surface side, the lower limit of the Mo content be 0.05 mass% and the upper limit of the Mo content be 0.20 mass%.

Nb: 0.040 mass% or less

Although Nb is an element which is important for improving the strength of a weld metal by increasing hardenability, in the case where the Nb content is excessively high, since there is a significant increase in the hardness of a weld metal, there is a deterioration in toughness. Therefore, the Nb content is set to be 0.040 mass% or less on both inner and outer surface sides. It is preferable that the lower limit of the Nb content be 0.010 mass% and the upper limit of the Nb content be 0.030 mass%.

V: 0.010 mass% or less

Although V is an element which is important for improving the strength of a weld metal by increasing hardenability, in the case where the V content is excessively high, since there is a significant increase in the hardness of a weld metal, there is a deterioration in toughness. Therefore, the V content is set to be 0.010 mass% or less on both inner and outer surface sides. It is preferable that the V content be 0.005 mass% or less. It is more preferable that the lower limit of the V content be 0.002 mass% and the upper limit of the V content be 0.004 mass%.

Ti: 0.010 mass% to 0.040 mass%

Ti is an element which improves the toughness of a weld metal by forming oxides, which become acicular ferrite nucleation sites. In the case where the Ti content is excessively low, it is not possible to realize such an effect. On the other hand, in the case where the Ti content is excessively high, since there is an increase in the amount of solid solution Ti in a weld metal, there is a deterioration in toughness. Therefore, the Ti content is set to be 0.010 mass% to 0.040 mass% on both inner and outer surface sides. It is preferable that the lower limit of the Ti content be 0.015 mass% and the upper limit of the Ti content be 0.025 mass%.

B: 0.0015 mass% to 0.0040 mass% on the inner surface side and 0.0015 mass% to 0.0060 mass% on the outer surface side

B is an element which is segregated at grain boundaries and which, as a result, inhibits grain-boundary ferrite from being formed. In the case where the B content is excessively low, it is not possible to realize such an effect. On the other hand, in the case where the B content is excessively high, since there is a significant increase in the hardness of a weld metal, there is a deterioration in toughness. In particular, since a weld metal on the inner surface side is reheated when welding is performed on the outer surface side, such a phenomenon markedly occurs on the inner surface side. Therefore, the B content is set to be 0.0015 mass% to 0.0040 mass% on the inner surface side and 0.0015 mass% to 0.0060 mass% on the outer surface side. It is preferable that, on the inner surface side, the lower limit of the B content be 0.0015 mass% and the upper limit of the B content be 0.0030 mass% and that, on the outer surface side, the lower limit of the B content be 0.0015 mass% and the upper limit of the B content be 0.0050 mass%.

Al: 0.030 mass% or less

Although Al is an element which is added as a deoxidizing agent when molten steel is prepared, in the case where the Al content is excessively high, there is a deterioration in the toughness of a weld metal. Therefore, the Al content is set to be 0.030 mass% or less on both inner and outer surface sides. It is preferable that the lower limit of the Al content be 0.005 mass% and the upper limit of the Al content be 0.020 mass%.

O: 0.020 mass% to 0.040 mass%

O is an element which improves the mechanical properties of a weld metal by combining with Ti to form Ti oxides, which become acicular ferrite nucleation sites. In the case where the O content is excessively low, it is not possible to realize such an effect. On the other hand, in the case where the O content is excessively high, since grain-boundary ferrite is formed in a weld metal, there is a deterioration in toughness. Therefore, the O content is set to be 0.020 mass% to 0.040 mass% on both inner and outer surface sides.

N: 0.007 mass% or less

N is an element which is mixed in a weld metal as an impurity and which inhibits B from being segregated at grain boundaries by combining with B to form BN. In the case where the N content is excessively high, since grain-boundary ferrite is easily formed, there is a deterioration in the toughness of a weld metal. Therefore, the N content is set to be 0.007 mass% or less on both inner and outer surface sides. It is preferable that the lower limit of the N content be 0.003 mass% and the upper limit of the N content be 0.006 mass%.

Pcm: 0.140 to 0.180 on the inner surface side and 0.140 to 0.185 on the outer surface side

Pcm calculated by using equation (1) below is an index for indicating the hardenability of a weld metal, and, in the case where Pcm is excessively small, since grain-boundary ferrite tends to be precipitated, there is a deterioration in the toughness of a weld metal. On the other hand, in the case where Pcm is excessively large, since bainite is easily formed due to an increase in hardenability, there is also a deterioration in the toughness of a weld metal. Therefore, Pcm is set to be 0.140 to 0.180 on the inner surface side and 0.140 to 0.185 on the outer surface side. It is preferable that, on the inner surface side, the lower limit of Pcm be 0.160 and the upper limit of Pcm be 0.175 and that, on the outer surface side, the lower limit of Pcm be 0.160 and the upper limit of Pcm be 0.180.

$$Pcm = [C] + [Si]/30 + ([Mn] + [Cu] + [Cr])/20 + [Ni]/60$$

$$+ [Mo]/15 + [V]/10 + 5[B] \quad \cdots \quad (1)$$

[C]: C content (mass%) in the weld metal
[Si]: Si content (mass%) in the weld metal
[Mn]: Mn content (mass%) in the weld metal
[Cu]: Cu content (mass%) in the weld metal
[Cr]: Cr content (mass%) in the weld metal
[Ni]: Ni content (mass%) in the weld metal
[Mo]: Mo content (mass%) in the weld metal
[V]: V content (mass%) in the weld metal
[B]: B content (mass%) in the weld metal

The remainder of the weld metal on each of the inner and outer surface sides which is different from the constituents described above is Fe and incidental impurities such as P, S, and the like.

Note that a welding wire is appropriately selected to obtain weld metals having the chemical compositions described above in accordance with the chemical composition of a steel plate, the chemical composition of a flux, a thickness, welding conditions, and the like. In particular, it is preferable that the chemical composition of a welding wire be selected so that it is possible to easily control the chemical compositions of a weld metals to be within the ranges described above. That is, as described above, the Mo content of a weld metal is set to be 0.1 mass% or less on the inner surface side and 0.2 mass% or less on the outer surface side. Therefore, it is preferable that the Mo content of a welding wire be 0.55 mass% or less. In addition, the B content of a weld metal is set to be 0.0015 mass% to 0.0040 mass% on the inner surface side and 0.0015 mass% to 0.0060 mass% on the outer surface side. Therefore, it is preferable that the B content of a welding wire be 0.0150 mass% or less. It is more preferable that the lower limit of the B content of a welding wire be .0.100 mass%.

Hereafter, the method for manufacturing a welded steel pipe will be described. First, a plate- or strip-shaped steel plate having the chemical composition described above and a thickness of 6 mm to 20 mm is formed into a cylindrical shape, and the ends in the width direction of the steel plate are butted. Subsequently, submerged arc welding is performed on the ends in the width direction of the steel plate on each of the inner and outer surface sides to form linear weld zones (seams) having weld metals having the chemical compositions described above. At this time, after one-layer welding has been performed on the inner surface side, one-layer welding is performed on the outer surface side. When submerged arc welding is performed, a flux is spread along the butted ends, and welding is then performed in such a manner that arc is generated between a base metal and a welding wire which are covered with the flux. Here, although single electrode submerged arc welding, in which one welding wire is used, may be performed, it is preferable that multiple electrode submerged arc welding, in which plural welding wires are used, be performed. In addition, there is no particular limitation on the method used for arranging the plural electrodes, and, for example, a method in which the electrodes are arranged in a straight line in the proceeding direction of welding or the like may be used.

Hereafter, the chemical composition of a flux which is used when one-layer submerged arc welding is performed on the inner and outer surface sides will be described. In the case where the basicity of the flux (B.I.) calculated by using equation (2) below is excessively low, since there is an increase in the O content in a weld metal, there may be a deterioration in mechanical properties. On the other hand, in the case where B.I. is excessively high, since there is a decrease in the viscosity of molten slag which is generated when one-layer welding is performed, there may be a case where it is not possible to obtain a bead having good aesthetic appearance. Therefore, it is preferable that the B.I. of the flux used be 1.0 to 2.2.

Here, regarding the kind of the flux, any of a fused flux and sintered flux may be used.

$$B.I. = ([CaO] + [CaF_2] + [MgO] + 0.5[MnO])/\{[SiO_2] +$$

$$0.5([Al_2O_3] + [TiO_2])\} \quad \cdots \quad (2)$$

[CaO]: CaO content (mass%) in the flux
[CaF$_2$] : CaF$_2$ content (mass%) in the flux
[MgO]: MgO content (mass%) in the flux
[MnO]: MnO content (mass%) in the flux
[SiO$_2$] : SiO$_2$ content (mass%) in the flux

$[Al_2O_3]$ : $Al_2O_3$ content (mass%) in the flux
$[TiO_2]$ : $TiO_2$ content (mass%) in the flux

Hereafter, the welding heat input of one-layer welding performed on the inner and outer surface sides by using a submerged arc welding method will be described.

In the case where one-layer welding is performed on the seam on the inner and outer surface sides of a welded steel pipe, one-layer welding is performed on the inner surface side in advance, and one-layer welding is then performed on the outer surface side. When such welding is performed, it is necessary that the welding conditions be set so that a weld metal on the inner surface side and a weld metal on the outer surface side overlap with each other. In the case where the welding heat input is excessively small, there may be a case where welding defects occur due to insufficient penetration, insufficient fusion of a welding wire, or the like. On the other hand, in the case where the welding heat input is excessively large, since there is a deterioration in hardenability due to a decrease in the cooling rate of a weld metal, there may be a deterioration in the mechanical properties of the weld metal. In addition, on the inner surface side of a welded steel pipe having a thin thickness of 6 mm to 20 mm, there may be a problem in that molten metal tends to fall off when welding is performed.

To solve the problems described above, it is preferable that the welding heat input when one-layer welding is performed be set in accordance with the thickness of a steel plate, which is a material of a steel pipe. Specifically, it is preferable that one-layer welding be performed by using a submerged arc welding method under a condition in which the welding heat input $Q_B$ (kJ/mm) on the inner surface side satisfies relational expression (3) below and the welding heat input $Q_F$ (kJ/mm) on the outer surface side satisfies relational expression (4) below.

$$1.3 \times \exp(0.045 \times t) \leq Q_B \leq 1.9 \times \exp(0.048 \times t)$$

$$(3)$$

$$1.3 \times \exp(0.045 \times t) \leq Q_F \leq 1.9 \times \exp(0.048 \times t)$$

$$(4)$$

t: thickness (mm) of the steel plate

As described above, the present invention may be used for welding to form a welded steel pipe (for example, a UOE steel pipe, a spiral steel pipe, or the like) and can preferably be used for one-layer welding performed by using a submerged arc welding method on the inner and outer surface sides. In addition, when butt welding is performed on a steel plate, the present invention may be used for one-layer welding performed on the lower and upper surface sides. Moreover, the present invention may be used for various kinds of groove shapes.

EXAMPLE 1

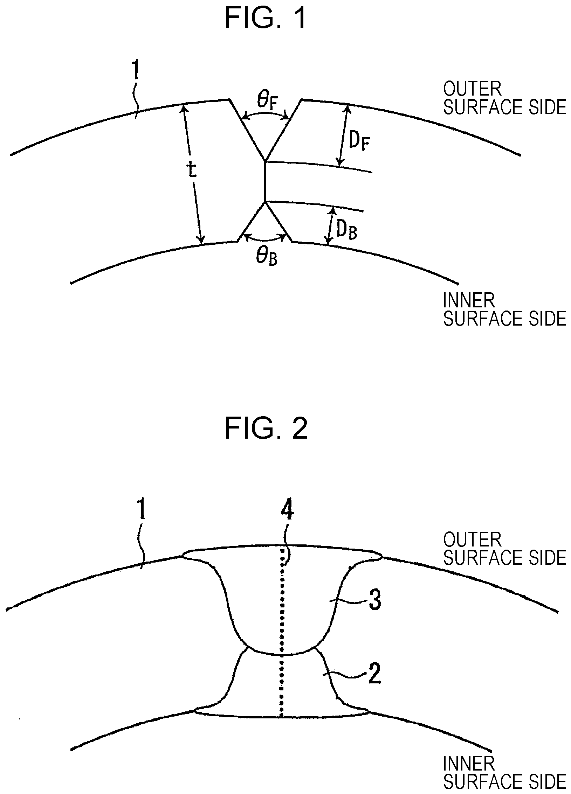

While a steel plate is fed into a manufacturing line for a UOE steel pipe, the manufacturing experiment of a welded steel pipe (of grade X60 as specified in the API Standards) was conducted. The thicknesses and chemical compositions of the steel plates are given in Table 1, and the groove shapes of butted portions (seams) are given in Fig. 1 and Table 2. The chemical compositions and B.I. values calculated by using equation (2) of fluxes used for one-layer submerged arc welding are given in Table 3, and the chemical compositions of welding wires are given in Table 4. One-layer welding was performed by using a four-electrode submerged arc welding method, and the welding conditions thereof are set as in Table 5.

[Table 1]

| Steel | Thickness (mm) | Chemical Composition (mass%) | | | | | | | | | | | | | | | | | | Pcm |
|---|---|---|---|---|---|---|---|---|---|---|---|---|---|---|---|---|---|---|---|---|
| | | C | Si | Mn | P | S | Cu | Ni | Cr | Mo | Nb | V | Ti | B | Al | Ca | Mg | REM | O | N | |
| BM1 | 12.7 | 0.042 | 0.34 | 1.35 | 0.004 | 0.001 | 0.01 | 0.01 | 0.27 | 0.13 | 0.031 | 0.002 | 0.010 | 0.0000 | 0.028 | 0.002 | 0.003 | 0.009 | 0.001 | 0.004 | 0.144 |
| BM2 | 20.0 | 0.046 | 0.32 | 1.34 | 0.005 | 0.001 | 0.02 | 0.01 | 0.28 | 0.14 | 0.028 | 0.002 | 0.008 | 0.0000 | 0.028 | 0.003 | 0.002 | 0.010 | 0.001 | 0.004 | 0.148 |

[Table 2]

| Steel Plate | $\theta_B$ (°) | $\theta_F$ (°) | $D_B$ (mm) | $D_F$ (mm) |
|---|---|---|---|---|
| BM1 | 90 | 90 | 3.0 | 6.0 |
| BM2 | 90 | 90 | 6.0 | 7.5 |

[Table 3]

| Flux | Chemical Composition (mass%) | | | | | | | B.I. |
|---|---|---|---|---|---|---|---|---|
| | $SiO_2$ | MnO | $TiO_2$ | $Al_2O_3$ | MgO | CaO | $CaF_2$ | |
| F1 | 23.9 | 4.6 | 3.6 | 4.2 | 5.8 | 27.7 | 24.8 | 2.18 |
| F2 | 34.6 | 5.6 | 9.2 | 7.9 | 5.1 | 20.7 | 14.9 | 1.01 |
| F3 | 23.5 | 4.2 | 4.6 | 4.5 | 6.9 | 26.4 | 27.3 | 2.24 |
| F4 | 32.1 | 5.1 | 8.2 | 8.3 | 3.81 | 18.9 | 12.3 | 0.93 |

[Table 4]

| Welding Wire | Chemical Composition (mass%) | | | | | |
|---|---|---|---|---|---|---|
| | C | Si | Mn | Mo | Ti | B |
| W1 | 0.081 | 0.28 | 1.81 | 0.00 | 0.139 | 0.0142 |
| W2 | 0.080 | 0.29 | 1.80 | 0.00 | 0.103 | 0.0000 |
| W3 | 0.081 | 0.28 | 1.82 | 0.00 | 0.001 | 0.0000 |
| W4 | 0.081 | 0.28 | 1.81 | 0.52 | 0.138 | 0.0140 |
| W5 | 0.083 | 0.27 | 1.79 | 0.51 | 0.001 | 0.0000 |
| W6 | 0.079 | 0.28 | 0.82 | 0.00 | 0.142 | 0.0138 |
| W7 | 0.080 | 0.29 | 0.80 | 0.00 | 0.100 | 0.0000 |
| W8 | 0.082 | 0.28 | 0.81 | 0.00 | 0.001 | 0.0000 |
| W9 | 0.081 | 0.28 | 0.79 | 0.50 | 0.141 | 0.0141 |
| W10 | 0.080 | 0.27 | 0.80 | 0.51 | 0.101 | 0.0000 |
| W11 | 0.081 | 0.29 | 0.80 | 0.50 | 0.001 | 0.0000 |

[Table 5]

| Welding Condition | First Electrode | | Second Electrode | | Third Electrode | | Fourth Electrode | | Welding Speed (mm/min) | Welding Heat Input (kJ/mm) |
|---|---|---|---|---|---|---|---|---|---|---|
| | Current (A) | Voltage (V) | Current (A) | Voltage (V) | Current (A) | Voltage (V) | Current (A) | Voltage (V) | | |
| WC1 | 1000 | 32 | 700 | 36 | 600 | 38 | 550 | 40 | 2500 | 2.45 |
| WC2 | 1200 | 33 | 900 | 36 | 800 | 39 | 700 | 41 | 2300 | 3.44 |
| WC3 | 950 | 32 | 680 | 35 | 570 | 37 | 450 | 39 | 2500 | 2.23 |
| WC4 | 1200 | 33 | 900 | 36 | 800 | 39 | 700 | 41 | 2200 | 3.60 |
| WC5 | 1250 | 33 | 900 | 35 | 800 | 38 | 700 | 40 | 2300 | 3.42 |
| WC6 | 1300 | 34 | 1000 | 38 | 850 | 40 | 780 | 42 | 2100 | 4.26 |
| WC7 | 1250 | 33 | 900 | 35 | 800 | 38 | 700 | 40 | 2500 | 3.15 |
| WC8 | 1300 | 34 | 1000 | 38 | 850 | 40 | 780 | 42 | 1800 | 4.97 |

The combinations of the steel plate, the flux, the welding wire, and the welding conditions for the manufacturing experiment of a welded steel pipe, that is, a UOE steel pipe, are given in Table 6.

[Table 6]

| No. | Steel | Welding Surface | Flux | Welding Condition | Welding Wire | | | | Relational Expression (3)* | Relational Expression (4)* |
|---|---|---|---|---|---|---|---|---|---|---|
| | | | | | First Electrode | Second Electrode | Third Electrode | Fourth Electrode | | |
| 1 | BM1 | Inner | F1 | WC1 | W1 | W1 | W7 | W3 | ○ | - |
| | | Outer | F1 | WC2 | W1 | W1 | W7 | W5 | - | ○ |
| 2 | BM1 | Inner | F2 | WC1 | W1 | W1 | W8 | W3 | ○ | - |
| | | Outer | F2 | WC2 | W1 | W1 | W8 | W5 | - | ○ |
| 3 | BM1 | Inner | F3 | WC1 | W1 | W3 | W2 | W6 | ○ | - |
| | | Outer | F3 | WC2 | W1 | W3 | W3 | W9 | - | ○ |
| 4 | BM1 | Inner | F4 | WC1 | W1 | W3 | W1 | W6 | ○ | - |
| | | Outer | F4 | WC2 | W1 | W9 | W2 | W3 | - | ○ |
| 5 | BM1 | Inner | F1 | WC3 | W8 | W1 | W1 | W1 | × | - |
| | | Outer | F1 | WC3 | W8 | W1 | W1 | W4 | - | × |
| 6 | BM1 | Inner | F1 | WC4 | W1 | W8 | W7 | W1 | × | - |
| | | Outer | F1 | WC4 | W1 | W1 | W11 | W8 | - | × |
| 7 | BM1 | Inner | F1 | WC1 | W4 | W1 | W9 | W9 | ○ | - |
| | | Outer | F1 | WC2 | W4 | W1 | W9 | W9 | - | ○ |
| 8 | BM1 | Inner | F1 | WC1 | W7 | W7 | W6 | W7 | ○ | - |
| | | Outer | F1 | WC2 | W7 | W7 | W6 | W7 | - | ○ |
| 9 | BM1 | Inner | F1 | WC1 | W3 | W1 | W4 | W9 | ○ | - |
| | | Outer | F1 | WC2 | W3 | W9 | W1 | W1 | - | ○ |
| 10 | BM2 | Inner | F1 | WC5 | W1 | W8 | W2 | W1 | ○ | - |
| | | Outer | F1 | WC6 | W10 | W1 | W1 | W3 | - | ○ |
| 11 | BM2 | Inner | F2 | WC5 | W1 | W8 | W1 | W1 | ○ | - |
| | | Outer | F2 | WC6 | W1 | W9 | W8 | W3 | - | ○ |
| 12 | BM2 | Inner | F3 | WC5 | W1 | W1 | W2 | W8 | ○ | - |
| | | Outer | F3 | WC6 | W1 | W9 | W3 | W2 | - | ○ |

| No. | Steel | Welding Surface | Flux | Welding Condition | Welding Wire | | | | Relational Expression (3)* | Relational Expression (4)* |
|---|---|---|---|---|---|---|---|---|---|---|
| | | | | | First Electrode | Second Electrode | Third Electrode | Fourth Electrode | | |
| 13 | BM2 | Inner | F4 | WC5 | W1 | W1 | W8 | W7 | ○ | - |
| | | Outer | F4 | WC6 | W9 | W1 | W3 | W2 | - | ○ |
| 14 | BM2 | Inner | F1 | WC7 | W8 | W1 | W1 | W6 | × | - |
| | | Outer | F1 | WC7 | W1 | W4 | W3 | W7 | - | × |
| 15 | BM2 | Inner | F1 | WC8 | W1 | W3 | W7 | W6 | × | - |
| | | Outer | F1 | WC8 | W4 | W3 | W7 | W6 | - | × |
| 16 | BM2 | Inner | F1 | WC5 | W4 | W4 | W4 | W8 | ○ | - |
| | | Outer | F1 | WC6 | W4 | W4 | W4 | W9 | - | ○ |
| 17 | BM2 | Inner | F1 | WC5 | W7 | W7 | W6 | W8 | ○ | - |
| | | Outer | F1 | WC6 | W7 | W7 | W6 | W8 | - | ○ |
| 18 | BM2 | Inner | F1 | WC5 | W4 | W8 | W1 | W1 | ○ | - |
| | | Outer | F1 | WC6 | W3 | W9 | W1 | W1 | - | ○ |
| *) ○: satisfied, ×: unsatisfied | | | | | | | | | | |

After having manufactured a UOE steel pipe by performing one-layer welding on the inner and outer surface sides as described above, by performing visual inspection on the aesthetic appearance of a bead of a portion other than the pipe ends, in which submerged arc welding had been stably performed (hereinafter, referred to as "stable welding portion"), inspection was conducted regarding whether or not welding defects exposed on the surface of the bead or meandering was observed. The results are given in Table 9. In table 9, symbol ⊙ in the column "Bead Appearance" indicates a case where a welding defect or meandering was not observed, and symbol ○ indicates a case where a welding defect was not observed while meandering was observed.

Subsequently, after having taken a test specimen from the stable welding portion, investigations were conducted regarding the chemical composition, hardness, and absorbed energy of the weld metals on the inner and outer surface sides. The chemical compositions of the weld metals are given in Tables 7 and 8.

[Table 7]

| No. | Welding Surface | Chemical Composition (mass%) | | | | | | | | | | | | | | | | Pcm |
|---|---|---|---|---|---|---|---|---|---|---|---|---|---|---|---|---|---|---|
| | | C | Si | Mn | P | S | Cu | Ni | Cr | Mo | Nb | V | Ti | B | Al | O | N | |
| 1 | Inner | 0.053 | 0.31 | 1.55 | 0.011 | 0.003 | 0.03 | 0.02 | 0.16 | 0.08 | 0.015 | 0.004 | 0.024 | 0.0023 | 0.011 | 0.0298 | 0.0044 | 0.168 |
| | Outer | 0.056 | 0.36 | 1.52 | 0.012 | 0.004 | 0.02 | 0.02 | 0.15 | 0.13 | 0.013 | 0.004 | 0.023 | 0.0025 | 0.009 | 0.0320 | 0.0039 | 0.174 |
| 2 | Inner | 0.054 | 0.35 | 1.51 | 0.010 | 0.003 | 0.02 | 0.02 | 0.14 | 0.07 | 0.014 | 0.003 | 0.018 | 0.0021 | 0.012 | 0.0381 | 0.0038 | 0.165 |
| | Outer | 0.052 | 0.32 | 1.50 | 0.009 | 0.003 | 0.02 | 0.02 | 0.16 | 0.13 | 0.017 | 0.002 | 0.020 | 0.0024 | 0.010 | 0.0374 | 0.0042 | 0.168 |
| 3 | Inner | 0.049 | 0.31 | 1.58 | 0.011 | 0.003 | 0.02 | 0.02 | 0.15 | 0.08 | 0.014 | 0.003 | 0.019 | 0.0020 | 0.011 | 0.0267 | 0.0036 | 0.163 |
| | Outer | 0.054 | 0.33 | 1.54 | 0.010 | 0.003 | 0.02 | 0.02 | 0.16 | 0.12 | 0.015 | 0.003 | 0.018 | 0.0019 | 0.012 | 0.0281 | 0.0044 | 0.169 |
| 4 | Inner | 0.050 | 0.33 | 1.51 | 0.009 | 0.003 | 0.03 | 0.02 | 0.14 | 0.07 | 0.016 | 0.004 | 0.020 | 0.0026 | 0.010 | 0.0383 | 0.0041 | 0.163 |
| | Outer | 0.051 | 0.36 | 1.53 | 0.009 | 0.004 | 0.02 | 0.02 | 0.16 | 0.13 | 0.015 | 0.002 | 0.021 | 0.0022 | 0.011 | 0.0391 | 0.0035 | 0.169 |
| 5 | Inner | 0.058 | 0.34 | 1.48 | 0.011 | 0.003 | 0.02 | 0.02 | 0.15 | 0.07 | 0.013 | 0.003 | 0.019 | 0.0026 | 0.012 | 0.0276 | 0.0041 | 0.170 |
| | Outer | 0.052 | 0.32 | 1.51 | 0.011 | 0.003 | 0.02 | 0.02 | 0.14 | 0.12 | 0.016 | 0.003 | 0.019 | 0.0023 | 0.013 | 0.0281 | 0.0040 | 0.166 |
| 6 | Inner | 0.054 | 0.30 | 1.46 | 0.010 | 0.003 | 0.03 | 0.02 | 0.16 | 0.08 | 0.014 | 0.003 | 0.022 | 0.0020 | 0.014 | 0.0334 | 0.0051 | 0.162 |
| | Outer | 0.060 | 0.33 | 1.52 | 0.011 | 0.003 | 0.02 | 0.02 | 0.16 | 0.13 | 0.015 | 0.002 | 0.018 | 0.0022 | 0.011 | 0.0346 | 0.0043 | 0.176 |
| 7 | Inner | 0.057 | 0.31 | 1.55 | 0.009 | 0.003 | 0.02 | 0.02 | 0.15 | <u>0.22</u> | 0.016 | 0.003 | 0.021 | 0.0038 | 0.010 | 0.0276 | 0.0046 | <u>0.188</u> |
| | Outer | 0.054 | 0.35 | 1.53 | 0.010 | 0.004 | 0.02 | 0.02 | 0.16 | <u>0.24</u> | 0.017 | 0.004 | 0.021 | 0.0041 | 0.010 | 0.0281 | 0.0040 | <u>0.188</u> |
| 8 | Inner | 0.049 | 0.33 | 1.16 | 0.011 | 0.003 | 0.03 | 0.02 | 0.15 | 0.07 | 0.015 | 0.003 | 0.020 | 0.0009 | 0.011 | 0.0301 | 0.0039 | <u>0.137</u> |
| | Outer | 0.052 | 0.33 | 1.13 | 0.011 | 0.003 | 0.02 | 0.02 | 0.14 | 0.07 | 0.014 | 0.003 | 0.022 | 0.0008 | 0.013 | 0.0296 | 0.0044 | <u>0.137</u> |
| 9 | Inner | 0.050 | 0.34 | 1.59 | 0.011 | 0.003 | 0.03 | 0.02 | 0.15 | <u>0.16</u> | 0.015 | 0.003 | 0.019 | 0.0025 | 0.011 | 0.0301 | 0.0039 | 0.174 |
| | Outer | 0.052 | 0.32 | 1.56 | 0.010 | 0.003 | 0.02 | 0.02 | 0.15 | 0.13 | 0.015 | 0.002 | 0.022 | 0.0024 | 0.012 | 0.0296 | 0.0042 | 0.170 |

18

[Table 8]

| No. | Welding Surface | Chemical Composition (mass%) | | | | | | | | | | | | | | | | Pcm |
|---|---|---|---|---|---|---|---|---|---|---|---|---|---|---|---|---|---|---|
| | | C | Si | Mn | P | S | Cu | Ni | Cr | Mo | Nb | V | Ti | B | Al | O | N | |
| 10 | Inner | 0.050 | 0.35 | 1.54 | 0.011 | 0.004 | 0.02 | 0.02 | 0.16 | 0.08 | 0.013 | 0.003 | 0.019 | 0.0020 | 0.015 | 0.0258 | 0.0051 | 0.164 |
| | Outer | 0.052 | 0.31 | 1.50 | 0.009 | 0.003 | 0.02 | 0.02 | 0.16 | 0.15 | 0.014 | 0.003 | 0.022 | 0.0018 | 0.012 | 0.0261 | 0.0052 | 0.166 |
| 11 | Inner | 0.051 | 0.32 | 1.59 | 0.011 | 0.003 | 0.02 | 0.02 | 0.16 | 0.07 | 0.014 | 0.003 | 0.020 | 0.0026 | 0.013 | 0.0351 | 0.0048 | 0.168 |
| | Outer | 0.052 | 0.33 | 1.48 | 0.010 | 0.003 | 0.02 | 0.02 | 0.14 | 0.14 | 0.015 | 0.004 | 0.018 | 0.0024 | 0.011 | 0.0346 | 0.0055 | 0.167 |
| 12 | Inner | 0.055 | 0.35 | 1.57 | 0.011 | 0.003 | 0.02 | 0.02 | 0.15 | 0.08 | 0.013 | 0.002 | 0.023 | 0.0022 | 0.014 | 0.0253 | 0.0050 | 0.171 |
| | Outer | 0.049 | 0.37 | 1.52 | 0.009 | 0.004 | 0.03 | 0.02 | 0.16 | 0.14 | 0.016 | 0.003 | 0.020 | 0.0022 | 0.012 | 0.0249 | 0.0042 | 0.168 |
| 13 | Inner | 0.057 | 0.31 | 1.53 | 0.011 | 0.003 | 0.02 | 0.02 | 0.16 | 0.08 | 0.015 | 0.003 | 0.021 | 0.0023 | 0.011 | 0.0376 | 0.0057 | 0.170 |
| | Outer | 0.054 | 0.33 | 1.50 | 0.010 | 0.003 | 0.02 | 0.02 | 0.15 | 0.15 | 0.017 | 0.003 | 0.021 | 0.0021 | 0.010 | 0.0384 | 0.0056 | 0.170 |
| 14 | Inner | 0.052 | 0.33 | 1.47 | 0.011 | 0.003 | 0.02 | 0.02 | 0.16 | 0.07 | 0.014 | 0.002 | 0.018 | 0.0025 | 0.012 | 0.0249 | 0.0056 | 0.163 |
| | Outer | 0.056 | 0.35 | 1.61 | 0.011 | 0.003 | 0.02 | 0.02 | 0.15 | 0.13 | 0.016 | 0.003 | 0.022 | 0.0023 | 0.013 | 0.0258 | 0.0046 | 0.177 |
| 15 | Inner | 0.052 | 0.36 | 1.50 | 0.011 | 0.003 | 0.02 | 0.02 | 0.14 | 0.08 | 0.015 | 0.004 | 0.019 | 0.0021 | 0.011 | 0.0282 | 0.0049 | 0.164 |
| | Outer | 0.051 | 0.31 | 1.50 | 0.010 | 0.003 | 0.03 | 0.02 | 0.16 | 0.15 | 0.015 | 0.003 | 0.020 | 0.0020 | 0.014 | 0.0290 | 0.0052 | 0.166 |
| 16 | Inner | 0.058 | 0.32 | 1.56 | 0.011 | 0.004 | 0.02 | 0.02 | 0.15 | 0.26 | 0.012 | 0.003 | 0.018 | 0.0034 | 0.012 | 0.0640 | 0.0049 | 0.190 |
| | Outer | 0.054 | 0.33 | 1.55 | 0.010 | 0.003 | 0.02 | 0.02 | 0.16 | 0.28 | 0.017 | 0.003 | 0.023 | 0.0036 | 0.010 | 0.0283 | 0.0044 | 0.189 |
| 17 | Inner | 0.050 | 0.34 | 1.14 | 0.009 | 0.003 | 0.02 | 0.02 | 0.16 | 0.08 | 0.015 | 0.003 | 0.020 | 0.0008 | 0.011 | 0.0290 | 0.0053 | 0.137 |
| | Outer | 0.052 | 0.33 | 1.14 | 0.011 | 0.003 | 0.03 | 0.02 | 0.14 | 0.07 | 0.014 | 0.004 | 0.021 | 0.0009 | 0.013 | 0.0288 | 0.0051 | 0.138 |
| 18 | Inner | 0.051 | 0.36 | 1.58 | 0.010 | 0.003 | 0.02 | 0.02 | 0.15 | 0.15 | 0.014 | 0.003 | 0.020 | 0.0026 | 0.012 | 0.0290 | 0.0048 | 0.174 |
| | Outer | 0.050 | 0.32 | 1.57 | 0.009 | 0.003 | 0.02 | 0.02 | 0.15 | 0.14 | 0.016 | 0.003 | 0.019 | 0.0024 | 0.012 | 0.0298 | 0.0050 | 0.170 |

Regarding the hardness of the weld metal, Vickers hardness was determined in accordance with JIS Z 3101 with a loading force of 98 N at intervals of 1 mm at a position located 2 mm from the inner surface layer, at intervals of 1 mm at a position located 2 mm from the outer surface layer, and at intervals of 1 mm on the central line of the weld metal (refer to Fig. 2). Here, Regarding the hardness of the weld metal, after Vickers hardness had been determined in accordance with JIS Z 3101 with a loading force of 98 N at intervals of 1 mm on the central line of the weld metal, the maximum value of the determined hardness was recorded (refer to Fig. 2). The results are given in Table 9.

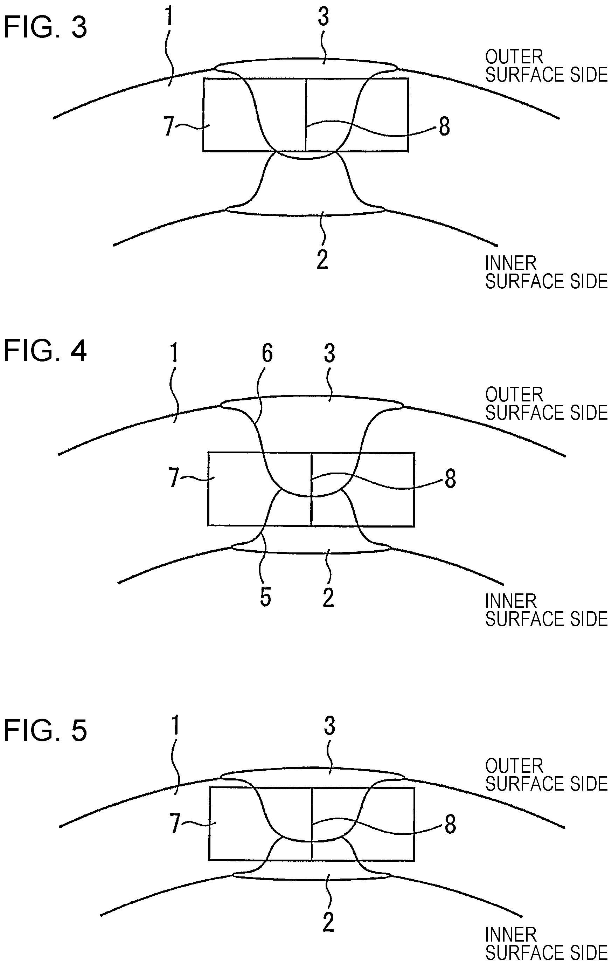

A Charpy impact test was performed on the weld metal in accordance with JIS Z 2242 at a temperature of -30°C. The size of the test specimen was 10 mm $\times$ 10 mm. The value of "$_VE_{-30}$ (J) on Outer Surface Side" in Table 9 indicates the result obtained by using a test specimen (refer to Fig. 3) which was taken so that the central line of the test specimen corresponded to a position located 7 mm from the outer surface layer of the UOE steel pipe made of steel BM2 (having a thickness of 20.0 mm). In addition, the value of "$_VE_{-30}$ (J) in Intersection Portion" in Table 9 indicates the result obtained by using a test specimen (refer to Fig. 4) which was taken so that the central line of the test specimen corresponded to a line connecting two intersections of the molten metal boundaries on the inner and outer surface sides. Moreover, the value of "$_VE_{-30}$ (J) in Central Portion" in Table 9 indicates the result obtained by using a test specimen (refer to Fig. 5) which was taken so that the central line of the test specimen corresponded to the central position in the thickness direction of the UOE steel pipe made of steel BM1 (having a thickness of 12.7 mm).

[Table 9] ¥page

| No. | Bead Appearance | | vE$_{-30}$(J) | | | Hv10 | | Note | Welding Defect |
|---|---|---|---|---|---|---|---|---|---|
| | Inner Surface Side | Outer Surface Side | Central Portion | Intersection Portion | Outer Surface Side | Inner Surface Side | Outer Surface Side | | |
| 1 | ⊙ | ⊙ | 211 | - | - | 228 | 232 | Example | None |
| 2 | ⊙ | ⊙ | 142 | - | - | 225 | 227 | Example | None |
| 3 | ○ | ○ | 235 | - | - | 233 | 229 | Example | None |
| 4 | ⊙ | ⊙ | 96 | - | - | 213 | 215 | Example | None |
| 5 | ⊙ | ⊙ | 127 | - | - | 225 | 224 | Example | Insufficient Penetration |
| 6 | ○ | ○ | 195 | - | - | 227 | 239 | Example | Melting down on Inner surface |
| 7 | ⊙ | ⊙ | 176 | - | - | 251 | 249 | Comparative Example | None |
| 8 | ⊙ | ⊙ | 46 | - | - | 205 | 202 | Comparative Example | None |
| 9 | ⊙ | ⊙ | 49 | - | - | 241 | 228 | Comparative Example | None |
| 10 | ⊙ | ⊙ | - | 209 | 228 | 214 | 220 | Example | None |
| 11 | ⊙ | ⊙ | - | 135 | 156 | 232 | 228 | Example | None |
| 12 | ○ | ○ | - | 215 | 230 | 222 | 227 | Example | None |
| 13 | ⊙ | ⊙ | - | 85 | 99 | 234 | 231 | Example | None |
| 14 | ⊙ | ⊙ | - | 131 | 144 | 217 | 221 | Example | Insufficient Fusion |
| 15 | ○ | ○ | - | 164 | 178 | 222 | 229 | Example | Melting down on Inner Surface |
| 16 | ⊙ | ⊙ | - | 185 | 222 | 253 | 250 | Comparative Example | None |
| 17 | ⊙ | ⊙ | - | 37 | 53 | 200 | 207 | Comparative Example | None |
| 18 | ⊙ | ⊙ | - | 44 | 218 | 227 | 230 | Comparative Example | None |

As indicated in Table 9, in the case of the examples of the present invention, the beads on both inner and outer surface sides had good aesthetic appearance. In addition, the weld metals on the inner and outer surface sides had a hardness Hv10 of 248 or lower, which was not excessively high, and good toughness represented by a $_vE_{-30}$ of 70 J or more. In particular, in the case of Nos. 1, 2, 10, and 11, since the B.I. value (basicity) of the flux satisfied relational expression (2), and since the welding heat input satisfied relational expressions (3) and (4), there was a marked improvement in the aesthetic appearance of the bead and in the toughness of the weld metal.

On the other hand, in the case of Nos. 7 and 16, which were comparative examples, since the Pcm of the weld metal was excessively high, there was an excessive increase in the hardness of the weld metal due to an increase in hardenability. In the case of Nos. 8 and 17, since the Pcm of the weld metal was excessively low, there was a deterioration in the toughness of the weld metal due to a decrease in hardenability. In the case of Nos. 9 and 18, since the Mo content of the weld metal on the inner surface side was excessively high, there was a decrease in the toughness of the portion of the weld metal on the inner surface side which had been reheated.

Even in the case of Nos. 3, 4, 12, and 13, that is, examples of the present invention, where the B.I. values of the flux did not satisfy expression (2) above (refer to Table 3), it was possible to obtain the desired aesthetic appearance of the bead, hardness, and toughness. However, in the case of Nos. 3 and 12, that is, examples of the present invention, where the B.I. value of the flux was larger than the upper limit of expression (2) above, there was a deterioration in the aesthetic appearance of the bead compared with the case satisfying expression (2) above. In addition, in the case of Nos. 4 and 13, that is, the examples of the present invention, where the B.I. value of the flux was less than the lower limit of expression (2) above, there was a deterioration in toughness compared with the case satisfying expression (2) above.

Even in the case of Nos. 5, 6, 14, and 15, that is, examples of the present invention, where the welding heat input did not satisfy relational expressions (3) and (4) above, it was possible to obtain the desired aesthetic appearance of the bead, hardness, and toughness. However, in the case of Nos. 5 and 14, that is, examples of the present invention, where the welding heat input was less than the lower limit of relational expressions (3) and (4) above, there was a case where insufficient penetration or insufficient fusion occurred. In addition, in the case of Nos. 6 and 15, that is, examples of the present invention, where the welding heat input was more than the upper limit of relational expressions (3) and (4) above, there was a case where the weld metal melted down on the inner surface. On the other hand, in the case of Nos. 1 to 4 and 10 to 13, that is, examples of the present invention, where the welding heat input satisfied relational expressions (3) and (4) above, such welding defects did not occur.

Reference Signs List

1    steel plate
2    weld metal on inner surface side
3    weld metal on outer surface side
4    Vickers hardness measurement position
5    molten metal boundary on inner surface side
6    molten metal boundary on outer surface side
7    Charpy impact test specimen
8    notch

**Claims**

1. A welded steel pipe obtained by forming a steel plate having a thickness of 6 mm to 20 mm into a cylindrical shape by butting both ends in a width direction of the steel plate and by performing one-layer submerged arc welding on both inner and outer surface sides,

   the steel plate having a chemical composition containing C: 0.030 mass% to 0.080 mass%, Si: 0.10 mass% to 0.50 mass%, Mn: 1.00 mass% to 2.00 mass%, P: 0.010 mass% or less, S: 0.005 mass% or less, Cu: 0.05 mass% or less, Ni: 0.05 mass% or less, Cr: 0.50 mass% or less, Mo: 0.20 mass% or less, Nb: 0.05 mass% or less, V: 0.100 mass% or less, Ti: 0.050 mass% or less, Al: 0.01 mass% to 0.05 mass%, Ca: 0.0005 mass% to 0.0050 mass%, Mg: 0.0003 mass% to 0.0100 mass%, REM: 0.020 mass% or less, and a balance of Fe and incidental impurities,
   a weld metal on the inner surface side having a chemical composition containing C: 0.030 mass% to 0.060 mass%, Si: 0.50 mass% or less, Mn: 0.80 mass% to 1.80 mass%, Cu: 0.05 mass% or less, Ni: 0.05 mass% or less, Cr: 0.30 mass% or less, Mo: 0.10 mass% or less, Nb: 0.040 mass% or less, V: 0.010 mass% or less, Ti: 0.010 mass% to 0.040 mass%, B: 0.0015 mass% to 0.0040 mass%, Al: 0.030 mass% or less, O: 0.020 mass% to 0.040 mass%, N: 0.007 mass% or less, and a balance of Fe and incidental impurities, in which Pcm calculated by using equation (1) below is 0.140 to 0.180, and

a weld metal on the outer surface side having a chemical composition containing C: 0.030 mass% to 0.060 mass%, Si: 0.50 mass% or less, Mn: 0.80 mass% to 1.80 mass%, Cu: 0.05 mass% or less, Ni: 0.05 mass% or less, Cr: 0.30 mass% or less, Mo: 0.20 mass% or less, Nb: 0.040 mass% or less, V: 0.010 mass% or less, Ti: 0.010 mass% to 0.040 mass%, B: 0.0015 mass% to 0.0060 mass%, Al: 0.030 mass% or less, O: 0.020 mass% to 0.040 mass%, N: 0.007 mass% or less, and a balance of Fe and incidental impurities, in which Pcm calculated by using equation (1) below is 0.140 to 0.185:

$$Pcm = [C] + [Si]/30 + ([Mn] + [Cu] + [Cr])/20 + [Ni]/60 + [Mo]/15 + [V]/10 + 5[B] \quad \cdots (1),$$

where

[C]: C content (mass%) in the weld metal,
[Si]: Si content (mass%) in the weld metal,
[Mn]: Mn content (mass%) in the weld metal,
[Cu]: Cu content (mass%) in the weld metal,
[Cr]: Cr content (mass%) in the weld metal,
[Ni]: Ni content (mass%) in the weld metal,
[Mo]: Mo content (mass%) in the weld metal,
[V]: V content (mass%) in the weld metal, and
[B]: B content (mass%) in the weld metal.

2. A method for manufacturing a welded steel pipe, the method comprising forming a steel plate having a thickness of 6 mm to 20 mm and having the chemical composition according to Claim 1 into a cylindrical shape, butting both ends in a width direction of the steel plate, and performing one-layer submerged arc welding on both inner and outer surface sides to form weld metals having the chemical compositions according to Claim 1.

3. The method for manufacturing a welded steel pipe according to Claim 2, wherein a flux used for submerged arc welding performed on the inner and outer surface sides satisfies a condition that B.I. calculated by using equation (2) below is 1.0 to 2.2:

$$B.I. = ([CaO] + [CaF_2] + [MgO] + 0.5[MnO])/\{[SiO_2] + 0.5([Al_2O_3] + [TiO_2])\} \quad \cdots (2),$$

where

[CaO]: CaO content (mass%) in the flux,
[CaF$_2$]: CaF$_2$ content (mass%) in the flux,
[MgO]: MgO content (mass%) in the flux,
[MnO]: MnO content (mass%) in the flux,
[SiO$_2$]: SiO$_2$ content (mass%) in the flux,
[Al$_2$O$_3$]: Al$_2$O$_3$ content (mass%) in the flux, and
[TiO$_2$]: TiO$_2$ content (mass%) in the flux.

4. The method for manufacturing a welded steel pipe according to claim 2 or 3, wherein the submerged arc welding is performed under a condition in which a welding heat input on the inner surface side $Q_B$ (kJ/mm) satisfies relational expression (3) below and a condition in which a welding heat input on the outer surface side $Q_F$ (kJ/mm) satisfies relational expression (4) below:

$$1.3 \times \exp(0.045 \times t) \leq Q_B \leq 1.9 \times \exp(0.048 \times t)$$

(3),

and

$$1.3 \times \exp(0.045 \times t) \leq Q_F \leq 1.9 \times \exp(0.048 \times t)$$

(4),

where t: thickness (mm) of the steel plate.

5. The method for manufacturing a welded steel pipe according to any one of Claims 2 to 4, wherein the submerged arc welding is performed by using a multiple electrode submerged arc welding method.

6. The method for manufacturing a welded steel pipe according to any one of claims 2 to 5, wherein one-layer welding is performed on the outer surface side after one-layer welding has been performed on the inner surface side.

# FIG. 1

1

$\theta_F$

OUTER
SURFACE SIDE

$D_F$

t

$D_B$

$\theta_B$

INNER
SURFACE SIDE

# FIG. 2

1

4

OUTER
SURFACE SIDE

3

2

INNER
SURFACE SIDE

FIG. 3

OUTER
SURFACE SIDE

INNER
SURFACE SIDE

FIG. 4

OUTER
SURFACE SIDE

INNER
SURFACE SIDE

FIG. 5

OUTER
SURFACE SIDE

INNER
SURFACE SIDE

**INTERNATIONAL SEARCH REPORT**

| International application No. |
|---|
| PCT/JP2021/002643 |

| A. CLASSIFICATION OF SUBJECT MATTER |
|---|
| C22C 38/00(2006.01)i; B21C 37/08(2006.01)i; B23K 9/025(2006.01)i; B23K. 9/18(2006.01)i; B23K 35/30(2006.01)i; B23K 35/362(2006.01)i; C22C 38/58(2006.01)i |
| FI:    C22C38/00 301B; B23K9/18 F; B23K9/18 A; B23K9/025 B; C22C38/58;    B23K35/30 320A; B23K35/362 310C; B21C37/08 A |
| According to International Patent Classification (IPC) or to both national classification and IPC |

| B. FIELDS SEARCHED |
|---|
| Minimum documentation searched (classification system followed by classification symbols) |
| C22C38/00-38/60; B21C37/08; B23K9/025; B23K9/18; B23K35/30; B23K35/362 |

| Documentation searched other than minimum documentation to the extent that such documents are included in the fields searched |
|---|
| Published examined utility model applications of Japan     1922-1996 |
| Published unexamined utility model applications of Japan     1971-2021 |
| Registered utility model specifications of Japan     1996-2021 |
| Published registered utility model applications of Japan     1994-2021 |

| Electronic data base consulted during the international search (name of data base and, where practicable, search terms used) |
|---|
|  |

| C. DOCUMENTS CONSIDERED TO BE RELEVANT |||
|---|---|---|
| Category* | Citation of document, with indication, where appropriate, of the relevant passages | Relevant to claim No. |
| A | JP 2013-204103 A (JFE STEEL CORPORATION) 07 October 2013 (2013-10-07) | 1-6 |
| A | WO 2018/185851 A1 (NIPPON STEEL & SUMITOMO METAL CORPORATION) 11 October 2018 (2018-10-11) | 1-6 |
| A | WO 2012/036148 A1 (NIPPON STEEL CORP.) 22 March 2012 (2012-03-22) | 1-6 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 April 2021 (14.04.2021) | 27 April 2021 (27.04.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| Patent Documents referred in the Report | Publication Date | Patent Family | Publication Date |
|---|---|---|---|
| JP 2013-204103 A | 07 Oct. 2013 | (Family: none) | |
| WO 2018/185851 A1 | 11 Oct. 2018 | JP 6308337 B1<br>US 2020/0032931 A1<br>EP 3608433 A1<br>CA 3057607 A1<br>CN 110475887 A<br>KR 10-2019-0124253 A<br>BR 112019016071 A | |
| WO 2012/036148 A1 | 22 Mar. 2012 | US 2013/0037162 A1<br>EP 2617857 A1<br>CN 102639741 A<br>KR 10-2012-0062017 A<br>RU 2013116583 A<br>BR 112012016055 A | |

<table>
<tr><td colspan="2">**INTERNATIONAL SEARCH REPORT**<br>Information on patent family members</td><td>International application No.<br>PCT/JP2021/002643</td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1038851 B
- JP 9001344 A
- JP 48100344 A
- JP 2010029931 A